# EUROPEAN PATENT APPLICATION

(11) **EP 3 236 139 A1**
(43) Date of publication of application: **25.10.2017**
(21) Application number: 17167292.6
(22) Date of filing: 20.04.2017
(51) Int. Cl.: F21V 9/06, F21V 3/04, F21V 13/02, F21S 6/00, F21S 8/04, F21Y 115/10, F21Y 115/15, F21Y 105/16, G02B 5/28

(54) **LIGHT UNIT**

(30) Priority: 22.04.2016 GB 201607023
(71) Applicant: Blue Planet Healthy Living Ltd, London N8 0EX (GB)
(72) Inventor: Williams, Mark, Earlsfield, London SW18 3RA (GB); Brauchle, Peer, London N8 0EX (GB)
(74) Representative: Windsor, Louise

(57) **Abstract**

A light unit (1) comprising at least one LED and/or at least one OLED light source (7); at least one filter layer (2) to filter High Energy Visible light; and at least one diffuser layer (3) to diffuse the filtered light from the or each light source (7).

## Description

The present invention relates to a light unit. More specifically, the invention relates to a light unit for use with an LED or OLED light source, such as a desk lamp, a wall lamp or a ceiling luminaire.

Lamps and luminaires used in both office and domestic environments commonly use light-emitting diodes (LEDs) or are now starting to use organic light-emitting diodes (OLEDs). LED and OLED light sources are rapidly replacing traditional light sources, such as fluorescent tubes and incandescent lamps. It has been found that the human retina responds to visible light in the approximate wavelength range of 400nm to 700nm. Shorter wavelength, higher frequency radiation has been found to pose significant hazard to human eye health. High frequency, high energy, violet/blue light is referred to as high energy visible (HEV) light in the approximate wavelength range 400nm to 500nm. Recent research has shown that HEV light may contribute to age related macular degeneration (AMD). Cataracts and macular degeneration have been associated with photochemical damage to the intraocular lens and retina as a result of blue light exposure. Blue light exposure has also been shown to accelerate proliferation of harmful uveal melanoma cells.

Most known light sources such as incandescent, fluorescent, halogen and LED light sources, which are used in overhead, desk and wall lights, have varying degrees of violet/blue light and UVA/UVB content. LEDs have a more significant output in the violet/blue regions; i.e. radiation having wavelengths in the range of 400nm to 500nm. Thus, there exists a significant need to address the concerns that artificial LED/OLED lighting may cause eye damage over long periods of time, particularly where the eyes are in close proximity to the light source.

It has been shown that the lens inside our eye is able to filter out red and green light components because these carry less energy. However, the lens inside our eye is not able to filter out HEV radiation. It is also been found that ganglion cells within the retina of the eye are particularly sensitive to the absorption of short wavelength, blue, visible light. Studies have shown that blue light absorbed by the eyes is related to regulation of the body clock, alertness and metabolic processes. Ganglion cells communicate information directly to the area of the brain called the suprachiasmatic nucleus (SCN). The SCN gathers information on the lengths of the day and night from the retina, interprets it, and passes it on to the pineal gland. It has been found that light from artificial light sources can affect the circadian "clock". Studies have shown that blue light, which peaks close to the spectral sensitivity of the circadian system, can have night-time alerting effects in humans. Recent research has established a functional relationship between nocturnal blue light exposure and alertness showing that light can affect biomarkers, performance and subject sleepiness. It has been suggested that controlled light exposures can be used to increase performance and alertness. Similarly, control of light exposure can also be used to avoid disruption to body clock regulation.

Thus, there remains a need to address the problems associated with widespread use of LED/OLED light sources and the increased exposure during daily activities to artificial lighting.

The present inventions seeks to alleviate the aforementioned disadvantages with known light sources by providing an improved light unit that allows an LED/OLED light source to be used safely.

### SUMMARY OF THE INVENTION

In one aspect, the present invention provides a light unit comprising:
at least one LED and/or at least one OLED light source;
at least one filter layer to filter High Energy Visible light; and
at least one diffuser layer to diffuse the filtered light from the or each light source.

Preferably, the light unit comprises one filter layer and one diffuser layer.

Optionally, the filter layer is to substantially block High Energy Visible light.

Within this specification, the term "substantially block High Energy Visible light" means that at least about 30% power of the illumination is blocked, preferably at least about 45%, preferably at least about 65%, preferably at least about 85%, preferably at least about 99%, preferably substantially all, preferably all High Energy Visible light is blocked.

The present invention allows for desk, wall or ceiling luminaire light units to be used safely without risking damage to the eye or harmful glare. Furthermore, the exposure to the light unit of the present invention will not disrupt the circadian system. The present invention reduces and/or prevents the night time alerting effect of blue wavelength contributions, i.e. HEV contributions, particularly the peak light absorption at blue light wavelengths around 480nm. The present invention is particularly beneficial for reducing retina damage and glare, to people who regularly spend long hours in close proximity to lighting units; for example, in inspection work or for those who have low vision conditions such as age related macular degeneration.

Preferably, the or each light unit is a desk lamp; or a wall light; or a ceiling luminaire.

Preferably, the filter layer to substantially block High Energy Visible light substantially blocks radiation having wavelengths up to about 500nm.

More preferably, the filter layer substantially blocks radiation having wavelengths of between about 400nm and about 500nm.

Preferably, the filter layer provides substantially high transmission to wavelengths greater than about 500nm.

More preferably, the filter layer provides substantially high transmission to radiation having wavelengths between about 500nm and about 700nm.

Within this specification, the term "provides substantially high transmission to radiation having wavelengths between about 500nm and about 700nm" means that at least about 90%, preferably at least about 95%, preferably at least about 97%, preferably at least about 98%, preferably at least about 99%, preferably substantially all, preferably all radiation having wavelengths between about 500nm and about 700nm passes through the absorbing device.

Preferably, the filter layer is an acrylic material; more preferably, further comprising agent chemical additives; and/or chemical auxiliary agents and/or dyes; and/or or pigments.

Optionally, the filter layer is a glass material; preferably further comprising agent chemical additives; and/or chemical auxiliary agents; and/or dyes; and/or or pigments.

Preferably, the filter layer is a polymethyl methacrylate (PMMA) material.

Preferably, the filter layer is a material such as Plexiglas, or Acrylite, or Lucite, or Perspex; optionally, further comprising agent chemical additives; and/or chemical auxiliary agents; and/or dyes; and/or pigments.

Is has been found that a PMMA material, also known as acrylic glass, with agent chemical additives; chemical auxiliary agents; dyes; or pigments provides very effective eye protection by substantially blocking high energy visible (HEV) violet/blue light, which has higher energy and shorter wavelengths in the approximate range 400nm to 500nm.

Preferably, the diffuser layer comprises a polycarbonate material.

Preferably, the diffuser layer comprises a material to diffuse evenly the remaining visible light transmitted through the filter layer from the light source.

The diffuser layer of the present invention ensures that concentrated high brightness spots from the or each (LED/OLED) light source are diffused, spread and/or scattered evenly. This avoids and/or reduces eye glare and projected surface shadows. The filtered, diffused light is "gentler" on the user's eyes.

Preferably, the filter layer has a thickness of between about 0.5mm and about 7mm. More preferably, the filter layer has a thickness of about 2mm.

In a further aspect, the present invention provides a method of altering and controlling the output light from an LED or OLED light source comprising the steps of:
i) filtering light emitted from LEDs or OLEDs to filter High Energy Visible light; and
ii) diffusing the filtered light.

Preferably, the filtering step is to substantially block High Energy Visible light.

Within this specification, the term "substantially block High Energy Visible light" means that at least about 30% power of the illumination is blocked, preferably at least about 45%, preferably at least about 65%, preferably at least about 85%, preferably at least about 99%, preferably substantially all, preferably all High Energy Visible light is blocked.

Preferably, the filtering step is to substantially block High Energy Visible light substantially blocks radiation having wavelengths up to about 500nm.

More preferably, the filtering step is to substantially block radiation having wavelengths of between about 400nm and about 500nm.

### DETAILED DESCRIPTION

Embodiments of the present invention will now be described by way of example and with reference to the accompanying figures, of which:
Figure 1 shows a schematic view of the layers of the light unit of the present invention, showing the filter layer and diffuser layer both separately and in combination;
Figure 2 shows a front view and a side view of a desk/floor LED luminaire comprising the light unit of the present invention;
Figure 3 shows a schematic components view of the layers of the desk/floor LED luminaire comprising the light unit, which is also shown in Figure 2;
Figure 4 shows a perspective schematic view of a ceiling/wall LED light panel luminaire comprising the light unit of the present invention, showing the layers separately and in combination;
Figure 5 shows a schematic view of the layers of the light unit of a second embodiment of the present invention, showing the filter layer and diffuser layer both separately and in combination; and
Figure 6 shows a schematic components view of the layers of the desk/floor LED luminaire comprising the light unit of Figure, a second embodiment of the present invention.

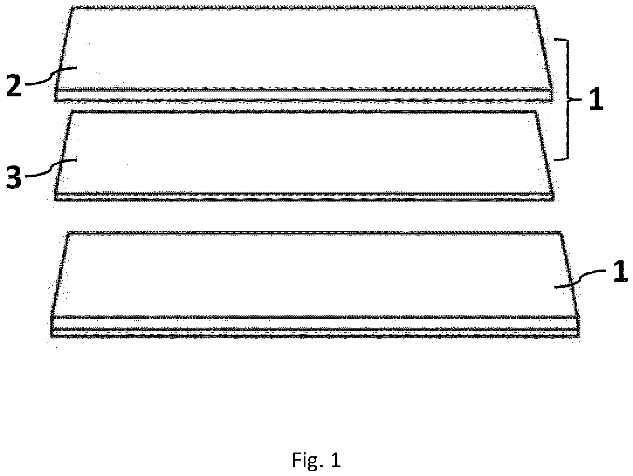

Referring to Figure 1, the light unit 1 comprises a multi-layer structure having a filter layer 2 and a diffuser layer 3. In use, the diffuser layer 3 is outermost and the filter layer 2 is innermost.

The filter layer 2 comprises a plate of a polymethyl methacrylate (PMMA) material, which is an acrylic glass material, optionally further comprising chemical additives, chemical auxiliary agents, dyes, and/or pigments. The filter layer has a thickness of between about 0.5mm and about 7mm. The preferred embodiment shown in Figure 1 has a filter layer of about 2mm. The filter layer 2 substantially blocks high energy visible light (HEV) by absorbing radiation in the violet-blue light region having wavelengths in the range of about 400nm to about 500nm. Longer wavelength radiation outside of the violet-blue light region is transmitted through the filter layer 2; for example, visible radiation in the range of about 500nm to about 700nm is transmitted substantially unchanged through the filter layer 2. It is understood that the filter layer 2 does not completely block HEV radiation to avoid an unbalanced perception of white light that is filtered by the filter layer 2. However, the filter layer 2 absorbs substantially all ultraviolet (UV) light having a wavelength of less than about 400nm.

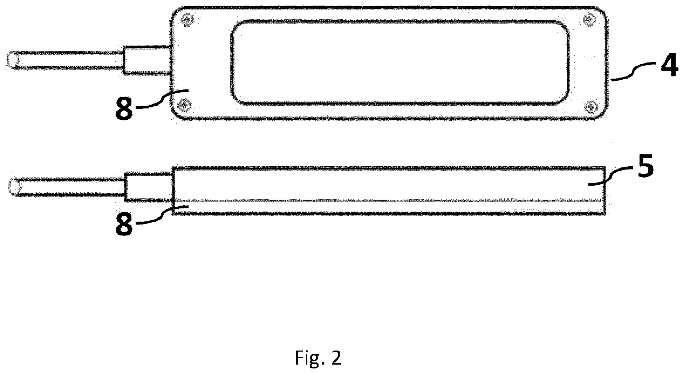

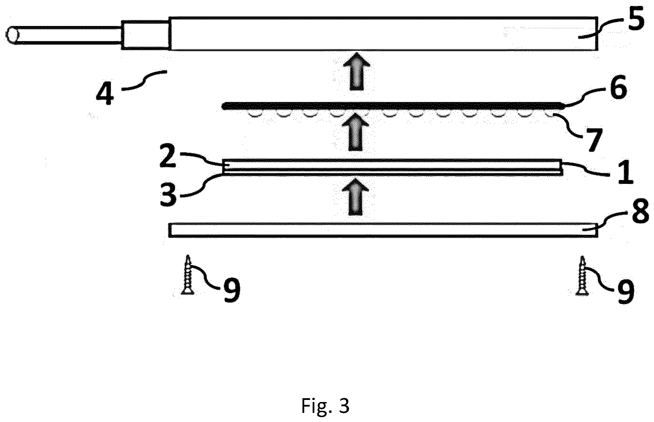

The diffuser layer 3 comprises a polycarbonate material. The diffuser layer 3 evenly diffuses or scatters concentrated high brightness spots from an LED or OLED light source used with the light unit 1 as described with respect to Figure 2 and Figure 3. The diffuser uses patterns embedded on the polycarbonate or polyester layer. These patterns create a pseudo-random surface that manipulates light by changing the direction of its energy. The diffuser layer homogenizes and shapes the light with 85% to 96% transmission efficiency. The light is shaped by spreading the horizontal radiation. Preferably, the diffuser layer has a thickness of between about 0.5mm and about 8mm. More preferably, the diffuser layer has a thickness of about 1mm.

Referring to Figure 2 and Figure 3, the light unit 1 of the present invention is shown incorporated into a desk or floor LED luminaire lamp 4. The combined filter layer 2 and diffuser layer 3 are closest to the light-emitting surface of the luminaire lamp 4. Referring to Figure 3, the luminaire lamp 4 comprises an upper lamp head casing 5 and a printed circuit board (PCB) 6 on which are mounted a plurality of LEDs or OLEDs light cell panels 7. The combined filter layer 2 and diffuser layer 3 are mounted close to the LEDs or OLED light cell panels 7 on a light-emitting side. Preferably, the distance between the filter/diffuser layer 2, 3 and the LEDs/OLED light cell panels 7 is less than or equal to 40mm. More preferably, the distance between the filter/diffuser layer 2, 3 and the LEDs/OLED light cell panels 7 is about 2.0mm. The PCB 6, LEDs/OLED light cell panels 7 and the filter/diffuser layer 2, 3 are secured within the luminaire lamp 4 by fixing the bottom lamp head casing 8 to the upper lamp head casing 5 using screws 9, or other similar fixing means.

In use, the luminaire lamp 4 is switched on and radiation is emitted from the LEDs/OLEDs light cell panels 7. Radiation passing through the filter layer 2 is filtered so that radiation in the range of about 400nm to 500nm is filtered, before the remaining radiation, including radiation in the range of about 500nm to 700nm that passes through the filter layer 2 unchanged, is evenly scattered by the diffuser layer 3 to be output from the luminaire lamp 4 through a window or aperture in the bottom casing 8.

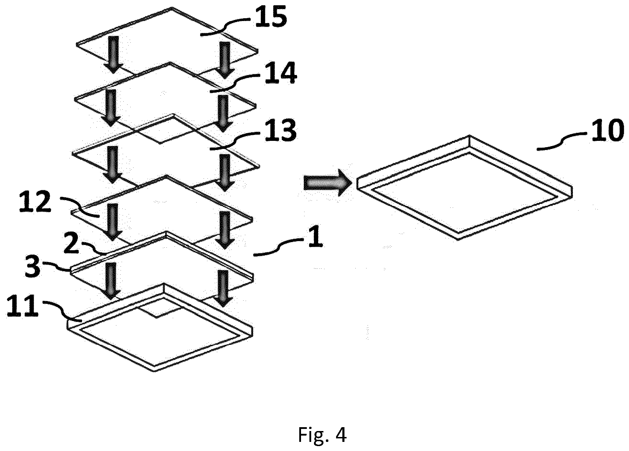

Referring to Figure 4, the light unit 1 of the present invention is shown incorporated into a ceiling luminaire panel 10. The combined filter layer 2 and diffuser layer 3 are closest to the light-emitting surface of the ceiling luminaire panel 10. The combined filter layer 2 and diffuser layer 3 are held within the frame 11 of the ceiling luminaire panel 10. The ceiling luminaire panel 10 further comprises a light guide plate 12, which is also held within the frame 11. A light bar frame 13 of LEDs or OLED light cell panels supported on a PCB frame are mounted between the light guide plate 12 and a reflective plate 14. The ceiling luminaire panel 10 is sealed by fixing a back cover 15 to the frame 11. The arrows shown on Figure 4 refer to the preferred order in which the component of the ceiling luminaire panel 10 are positioned with the frame 11 before the back cover 15 is screwed or clipped into place to secure the multi-layered structure of the ceiling luminaire panel 10.

In use, the LEDs or OLED light cell panels 13 are switched on to direct radiation through the combined filter layer 2 and diffuser layer 3. The reflective plate 14 and light guide plate 12 ensure that radiation is directed downwards through the frame 11. The filter layer 2 filters radiation emitted from the LEDs or OLED light cell panels 13 having a higher-energy, shorter-wavelengths in the range of about 400nm to about 500nm. This is particularly important for correlated colour temperatures (CCT) greater than or equal to 5000°K, which have much higher HEV light contributions. The diffuser layer 3 evenly scatters and/or diffuses the filtered light, which is output through an aperture of the frame 11.

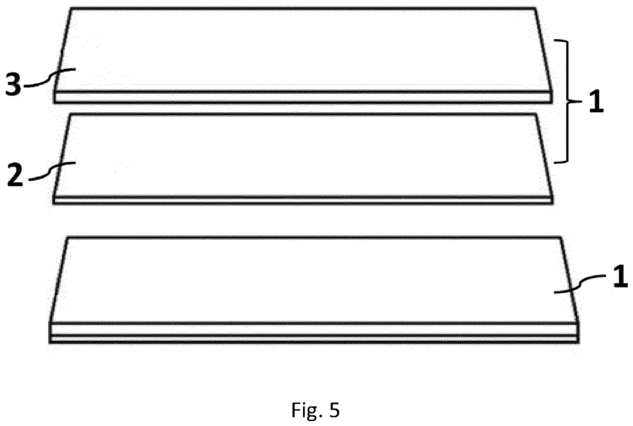

Referring to Figure 5, in an alternative embodiment of the present invention, the light unit 1 comprises a multi-layer structure having a filter layer 2 and a diffuser layer 3, as previously described with respect to Figure 1. In use, the diffuser layer 3 is innermost and the filter layer 2 is outermost.

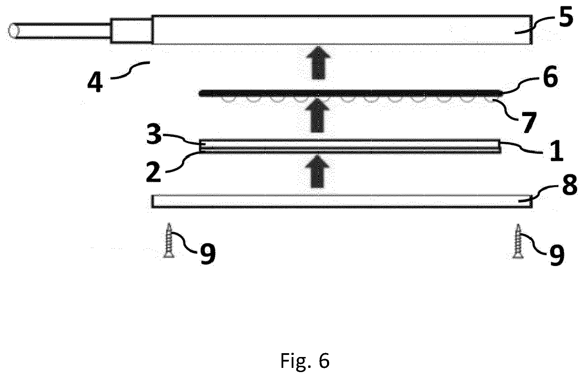

Referring to Figure 6, in an alternative embodiment, the light unit 1 of the present invention is shown incorporated into a desk or floor LED luminaire lamp 4. As before, the combined filter layer 2 and diffuser layer 3 are closest to the light-emitting surface of the luminaire lamp 4; however, in this second embodiment the diffuser layer 3 is innermost and the filter layer 2 is outermost. Referring to Figure 6, the luminaire lamp 4 comprises an upper lamp head casing 5 and a printed circuit board (PCB) 6 on which are mounted a plurality of LEDs or OLEDs light cell panels 7. The combined filter layer 2 and diffuser layer 3 are mounted close to the LEDs or OLED light cell panels 7 on a light-emitting side. Preferably, the distance between the filter/diffuser layer 2, 3 and the LEDs/OLED light cell panels 7 is less than or equal to 40mm. More preferably, the distance between the filter/diffuser layer 2, 3 and the LEDs/OLED light cell panels 7 is about 2.0mm. The PCB 6, LEDs/OLED light cell panels 7 and the filter/diffuser layer 2, 3 are secured within the luminaire lamp 4 by fixing the bottom lamp head casing 8 to the upper lamp head casing 5 using screws 9, or other similar fixing means.

In use, the luminaire lamp 4 is switched on and radiation is emitted from the LEDs/OLEDs light cell panels 7. Radiation passing through the diffuser layer 2 is evenly scattered and then passes through the filter layer 3. Radiation passing through the filter layer 3 is filtered so that radiation in the range of about 400nm to 500nm is filtered to be output from the luminaire lamp 4 through a window or aperture in the bottom casing 8.

It is understood that the alternative arrangement whereby the filter layer 2 is outermost and the diffuser layer 3 is innermost applies to all embodiments previously described. For example, the light unit 1 of the embodiment of Figure 4 can also be arranged whereby the filter layer 2 is outermost and the diffuser layer 3 is innermost, with the light unit 1 incorporated into a ceiling luminaire panel 10. As before, the combined filter layer 2 and diffuser layer 3 are closest to the light-emitting surface of the ceiling luminaire panel 10. The combined filter layer 2 and diffuser layer 3 are held within the frame 11 of the ceiling luminaire panel 10. It is understood that, in the context of this invention, "outermost" refers to the direction that light is emitted and output. In the context of this invention, "innermost" refers to the direction opposing the direction that light is emitted and output.

Within this specification, the term "about" means plus or minus 20%, more preferably plus or minus 10%, even more preferably plus or minus 5%, most preferably plus or minus 2%.

It should be understood that various changes and modifications to the presently preferred embodiment described herein would be apparent to those skilled in the art. Such changes in modifications can be made without departing from the spirit and scope of the present invention and without diminishing its attendant advantages. It is therefore intended that such changes and modifications are covered by the appended claims.

## Claims

1. A light unit (1) comprising:
at least one LED and/or at least one OLED light source (7);
at least one filter layer (2) to filter High Energy Visible light; and
at least one diffuser layer (3) to diffuse the filtered light from the or each light source.

2. A light unit according (1) to claim 1 comprising one filter layer (2) and one diffuser layer (3); preferably, wherein the filter layer (2) is to substantially block High Energy Visible light; and/or, wherein the filter layer (2) is to substantially block at least about 30% of High Energy Visible light.

3. A light unit (1) according to any preceding claim wherein the or each light unit is a desk lamp (4); or a wall light; or a ceiling luminaire (10).

4. A light unit (1) according to any preceding claim wherein the filter layer (2) is to substantially block High Energy Visible light substantially blocks radiation having wavelengths up to about 500nm; preferably, wherein the filter layer (2) substantially blocks radiation having wavelengths of between about 400nm and about 500nm.

5. A light unit (1) according to any preceding claim wherein the filter layer (2) provides substantially high transmission to wavelengths greater than about 500nm; preferably, wherein the filter layer (2) provides substantially high transmission to radiation having wavelengths between about 500nm and about 700nm.

6. A light unit (1) according to any preceding claim wherein the filter layer (2) is an acrylic material; preferably, further comprising agent chemical additives; and/or chemical auxiliary agents and/or dyes; and/or pigments.

7. A light unit (1) according to any of claims 1 to 5 wherein the filter layer (2) is a glass material; preferably, further comprising agent chemical additives; and/or chemical auxiliary agents; and/or dyes; and/or or pigments.

8. A light unit (1) according to any of claims 1 to 5 wherein the filter layer (2) is a polymethyl methacrylate (PMMA) material.

9. A light unit (1) according to any of claims 1 to 5 wherein the filter layer (2) is a material such as Plexiglas, or Acrylite, or Lucite, or Perspex; preferably, further comprising agent chemical additives; and/or chemical auxiliary agents; and/or dyes; and/or pigments.

10. A light unit (1) according to any preceding claim wherein the diffuser layer (3) comprises a polycarbonate material.

11. A light unit (1) according to any preceding claim wherein the filter layer (2) has a thickness of between about 0.5mm and about 7mm; preferably, wherein the filter layer (2) has a thickness of about 2mm.

12. A method of altering and controlling the output light from an LED or OLED light source comprising the steps of:
i) filtering light emitted from LEDs or OLEDs to filter High Energy Visible light; and
ii) diffusing the filtered light.

13. A method of altering and controlling the output light from an LED or OLED light source according to claim 12, wherein the filtering step is to substantially block High Energy Visible light; preferably, wherein the filtering step blocks at least about 30% power of the illumination.

14. A method according to any of claims 12 to 13 wherein the filtering step to substantially block High Energy Visible light substantially blocks radiation having wavelengths up to about 500nm.

15. A method according to any of claims 12 to 14 wherein the filtering step is to substantially block radiation having wavelengths of between about 400nm and about 500nm.
